# EUROPEAN PATENT APPLICATION

(11) **EP 1 553 413 A1**
(43) Date of publication of application: **13.07.2005**
(21) Application number: 03795260.3
(22) Date of filing: 29.08.2003
(51) Int. Cl.: G01N 33/53, G01N 33/543, G01N 37/00

(54) **SUBSTRATE FOR BIOASSAY, SUBSTRATE INFORMATION READER, AND SUBSTRATE INFORMATION READING METHOD**

(30) Priority: 30.08.2002 JP 2002256062
(71) Applicant: Sony Corporation, Tokyo 141-0001 (JP)
(72) Inventor: FUJITA, Goro, c/o Sony Corporation, Tokyo 141-0001 (JP)
(74) Representative: Horner, David Richard
(86) International application number: PCT/JP2003/011082
(87) International publication number: WO 2004/025296

(57) **Abstract**

A substrate for bioassay is provided in which sample substances can be disposed or pipetted efficiently and precisely on arbitrary reaction areas and a mutual reaction process such as hybridization at arbitrary reaction areas can be precisely detected. A substrate (1) that can optically interpret recorded information and including areas (2) to be detected is provided. Each of the areas (2) to be detected includes a data-detecting area (21) including at least a reaction area (21b) providing an area used for the mutual reaction process of substances (D) to be detected and a target substance (T), and a servo area (22) disposed in the area that is not overlapped with the data-detecting area (21) and optically providing positional information on the data-detecting area (21).

## Description

### Technical Field

The present invention relates to a substrate for bioassay, which is particularly useful in bioinformatics (life information science) field, and a device for interpreting information on the substrate for bioassay.

### Background Art

At present, for the purposes of the analysis of an intermolecular mutual reaction process, the analysis of gene mutation, the analysis of single nucleotide polymorphisms (SNPs), or the analysis of the frequency of gene expression, the following bioassay technology is known. In the technology, nucleotide chains or proteins to be detected such as DNA probes having a known sequence are disposed on a predetermined detection surface area on a substrate to optically detect the state of a mutual reaction process with a target molecule. This technology has begun to be widely utilized in many fields such as the development of new drugs, clinical diagnosis, pharmacogenomics, and forensic medicine.

An integrated substrate for bioassay, called a DNA chip or a DNA microarray (hereinafter generically referred to as DNA chip), is a typical tool used for performing the above bioassay technology efficiently. In the integrated substrate, for example, predetermined DNA probes are finely arrayed using microarray technology.

In the DNA chip, various kinds of many DNA oligo chains or complementary DNAs (cDNAs) etc. are integrated on a glass substrate or a silicon substrate. The DNA chip allows the complete analysis of an intermolecular mutual reaction process such as hybridization.

An example of the analysis method using the DNA chip will now be briefly described. An mRNA extracted from, for example, a cell or a tissue is amplified by PCR with a DNA probe fixed in a solid phase on a glass substrate or a silicon substrate. The PCR amplification is performed while incorporating a fluorescent probe dNTP by, for example, reverse transcription PCR. Thus, hybridization is performed on the substrate and fluorescence is measured with a predetermined detector.

According to a fluorescence measurement device employed in various DNA chips, a fluorescent substance used for marking the target nucleotide chain hybridized with a nucleotide chain to be detected fixed on the detection surface, or a fluorescent intercalator intercalated at the complementary bonding site is excited with excitation light having a predetermined wavelength in order to detect the emitted fluorescence.

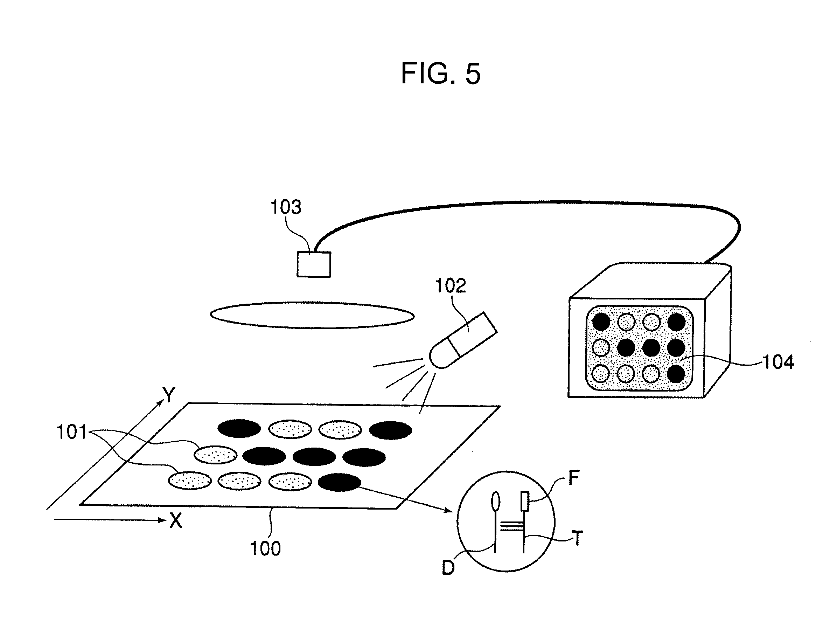

Fig. 5 is a view briefly explaining the general principle of a known method for detecting hybridization. Firstly, a plurality of nucleotide chains D to be detected are arrayed by fixing on the predetermined reaction areas (spot areas) 101 arrayed in the X direction and in the Y direction of a substrate 100. A target nucleotide chain T to be pipetted is marked in advance with a fluorescent substance F.

The nucleotide chains D to be detected and the target nucleotide chain T marked with the fluorescent substance are hybridized at the reaction areas 101, 101, and so on. After a washing operation, a two-dimensional light sensor 102 such as a charge-coupled device (CCD) camera detects fluorescence from the reaction areas 101, 101, and so on. Thus, light or shade can be observed in each reaction area 101 depending on whether active hybridization is generated or not. A controller 103 transmits the image data from the two-dimensional light sensor to a computer, where the image is displayed on a display 104. Thus, which of nucleotide chains D to be detected is hybridized with the target nucleotide chain T can be completely analyzed.

However, in the above known art, the nucleotide chains to be detected such as DNA probes, or the target nucleotide chain is arrayed by manual operation or pipetted with an automatically driving X-Y stage. Therefore, each process is time consuming.

Furthermore, since the analytical observation using the two-dimensional sensor requires a large optical system, it is difficult to produce a portable detection device. In addition, in terms of the resolution of the sensor, arraying a large number of DNA probes is difficult.

Accordingly, it is a main object of the present invention to dispose or pipette substances to be detected or a target substance efficiently and precisely on a plurality of arbitrary reaction areas formed on a disc-shaped substrate. Also, it is a main object of the present invention to precisely detect a mutual reaction process such as hybridization at arbitrary reaction areas.

### Disclosure of Invention

In order to solve the above technical problems, firstly, the present invention provides the following substrate for bioassay. In the present invention, the term bioassay generally refers to biochemical analysis based on hybridization or other mutual reactions between substances.

The substrate for bioassay according to the present invention includes a disc-shape substrate that can optically interpret recorded information. The substrate includes areas to be detected including the following areas (1) and (2) as a unit: (1) a data-detecting area including at least a reaction area providing an area used for a mutual reaction process of substances to be detected and a target substance, and (2) a servo area disposed in the area that is not overlapped with the data-detecting area and optically providing positional information on the data-detecting area.

For example, the areas to be detected are composed of cellular unit structures segmented at least in the circumferential direction of the substrate, preferably, in the circumferential direction and in the radial direction of the substrate. The shape of the areas to be detected is not particularly limited. In such areas to be detected, the data-detecting area and the servo area are disposed in separate areas. This is a feature of the structure of the areas to be detected. That is, the data-detecting area has an exclusive function of providing an area to be used for a mutual reaction process and does not have a function of providing positional information. On the other hand, the servo area has an exclusive function of providing positional information that is specific in each area to be detected and does not have a function of providing an area to be used for a mutual reaction process.

A sample solution is pipetted on the areas to be detected of the disc-shaped substrate while the substrate is rotating. In addition, the state of the mutual reaction process is detected. In order to achieve these objects, a plurality of the areas to be detected may be arrayed in the circumferential direction. Specifically, the areas to be detected may be arrayed on the substrate in concentric circles or in a spiral shape.

The reaction area in each area to be detected may include a detection surface on which a surface treatment is performed so as to fix the substances to be detected. A mutual reaction process may be performed between the substances to be detected that are fixed on the detection surface and the target substance.

A tracking mark and an address mark used in optical disc technology may be applied to the positional information in the servo area. Information is provided from these marks using optical pickup. The tracking mark provides positional information of each area to be detected in the radial direction. For example, irregular marks disposed at positions deviated by +1/4 tracks and -1/4 tracks in the radial direction can be used. The address mark provides address information of each area to be detected on the substrate. For example, the address mark can be formed based on a fine irregular pattern formed on the substrate.

The substances to be detected and the target substance may be nucleotide chains and the mutual reaction process may be hybridization. In such a case, the substrate for bioassay according to the present invention can function as a DNA chip and can be utilized in, for example, the complete analysis of genes.

The present invention also provides a device or a method for optically interpreting information on the above substrate for bioassay precisely.

Specifically, in the device or the method for interpreting substrate information, an operation or a step of positioning a discharging head used for pipetting a predetermined sample solution on the data-detecting area and an operation or a step of positioning an optical head used for irradiating light and for receiving the reflected light (in the present invention, hereinafter referred to as optical pickup) to detect the positional information and to detect information on the mutual reaction process in the reaction area are controlled according to positional information obtained from the servo area. Preferably, the data-detecting area is irradiated with only excitation light for detection and is not irradiated with light for obtaining the positional information in the servo area. The above reflected light represents the light returning from the substrate as a result of light irradiation on the servo area or the data-detecting area of the substrate.

According to the present device or the present method, substances to be detected or a target substance can be disposed or pipetted efficiently and precisely on a plurality of arbitrary reaction areas formed on a disc-shaped substrate. Also, a mutual reaction process such as hybridization at arbitrary reaction areas can be precisely detected.

As described above, the present invention has a technical significance to provide a novel integrated substrate technology concerning a DNA chip or a biosensor chip and to provide a technology to interpret the information from the integrated substrate.

### Brief Description of the Drawings

Fig. 1 is a simplified view showing the structure of a substrate 1 for bioassay and areas 2 to be detected according to the present invention.
Fig. 2 is a view showing an arrangement example of the areas 2 to be detected in the substrate 1 according to the present invention.
Fig. 3 is a perspective view of the appearance showing an embodiment of a data-detecting area 21 forming the areas 2 to be detected according to the present invention.
Fig. 4 is a diagram showing a preferable embodiment of a device (U) for interpreting substrate information and a method for interpreting substrate information using the device (U) according to the present invention.
Fig. 5 is a simplified view showing the structure of a typical known art.

### Best Mode for Carrying Out the Invention

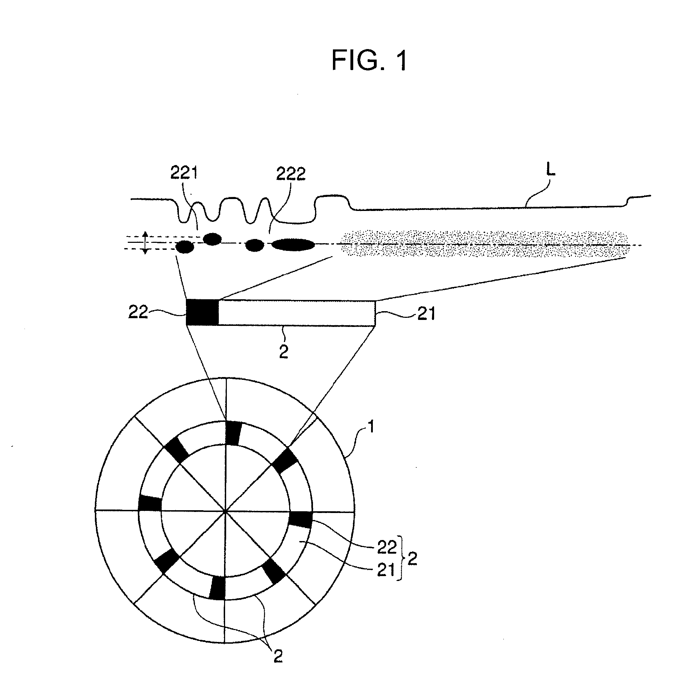

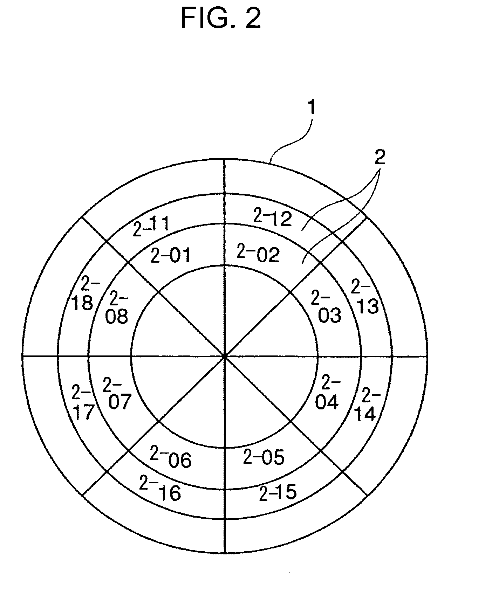

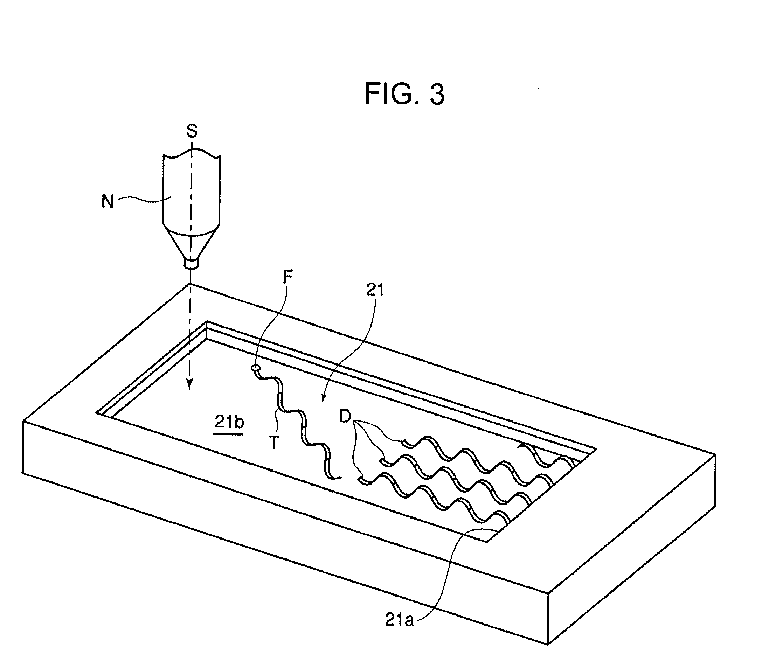

Preferable embodiments of the present invention will now be described with reference to the accompanying drawings. Fig. 1 is a simplified view showing the structure of a substrate for bioassay and areas to be detected according to the present invention, Fig. 2 is a view showing an arrangement example of the areas to be detected in the substrate according to the present invention, and Fig. 3 is a perspective view of the appearance showing an embodiment of a data-detecting area forming the areas to be detected according to the present invention.

In view of the objects of the present invention, the embodiments that can be used in the present invention include a substrate that has a large number of areas to be detected and can be produced inexpensively on a large scale. The structure of the areas to be detected is designed such that substances to be detected such as DNA probes can be arrayed on the substrate time-efficiently. The embodiments that can be used in the present invention also include a device for interpreting substrate information that is more compact in size and can detect a mutual reaction process between substances (for example, hybridization).

Firstly, a disc-shaped substrate 1 shown in Fig. 1 etc. is used in the present invention. Substances to be detected are separately arrayed on the substrate 1 in the rotation direction (circumferential direction) and in the radial direction.

The substrate 1 can be formed using a base material of a disc substrate (disc) used in optical information recording media such as CDs, DVDs, and MDs. The base material includes quartz glass, silicon, polycarbonate, polystyrene, and other synthetic resins that can be molded in a disc-shape, preferably synthetic resins that can be subjected to injection molding. The disc-shape can be formed using these base materials. The use of the substrate composed of an inexpensive synthetic resin can achieve an operating cost that is lower than that of a glass chip used in a known method, and in addition, allows mass production. A hole (not shown in the figure) may be formed at the center of the substrate 1. The hole is disposed so as to be fixed with a spindle when the substrate is rotated.

A deposited aluminum layer, which is a reflecting layer, is formed on one surface of the substrate 1. The deposited aluminum layer has a thickness of about 40 nm and functions as a reflecting layer. This reflecting layer has at least 4% of the surface reflection from the single substrate having a refractive index of at least 1.5. A light-transmitting layer composed of clear glass or a clear resin is disposed on the reflecting layer. When the base material has a high reflectivity, the reflecting layer need not be formed because the surface of the base material itself serves as a reflection plane. The formation of a film having a high reflectivity, for example, a metal film, allows the fluorescence intensity of a target substance marked with a fluorescent substance to be detected with high sensitivity.

As shown in Fig. 2, many cellular areas 2 to be detected, which are shown in Fig. 1 in an expanded state, are arrayed in the circumferential direction on the light-transmitting layer disposed on the surface of the substrate 1. In the following description related to the function of the areas 2 to be detected, single-strand nucleotide chains are used as a typical example of the substances to be detected and the target substance. However, the object reactants in the areas 2 to be detected are not limited to the above.

Each of the areas 2 to be detected includes a data-detecting area represented by reference numeral 21 and a servo area represented by reference numeral 22. The data-detecting area 21 includes a detection surface 21a and a reaction area 21b. A surface treatment is performed on the detection surface 21a by a common method so as to fix the end portion of the nucleotide chains to be detected, which are represented by symbol D in Fig. 3. In the reaction area 21b, the hybridization reaction between the nucleotide chains D to be detected fixed on the detection surface 21a in advance and a target nucleotide subsequently pipetted from a discharging head (nozzle) N is performed. In Fig. 3, in order to simplify the shape of the data-detecting area, the data-detecting area is shown in a rectangular shape when viewed from the top, although the data-detecting area actually has an arc shape when viewed from the top.

A surface treatment is preformed on the detection surface 21a such that the end of the nucleotide chains D to be detected is fixed by bonding due to a coupling reaction or the like. In other words, it is sufficient that a preferable surface treatment is performed on the detection surface 21a so as to fix the end portion of the nucleotide chains D to be detected such as DNA probes, the end portion being processed in advance. Therefore, the kind of detection surface 21a is not strictly limited. For example, a detection surface treated with streptoavidin is suitable for fixing the end of a biotinylated nucleotide chain.

A spacer molecule that does not have a mutual reactivity with the substances to be detected or the target substance is preferably inserted between the detection surface 21a and the nucleotide chains D to be detected (i.e., substances to be detected). In such a case, since the nucleotide chains D to be detected can be more exposed in the reaction area 21b, steric hindrance in the hybridization with a target nucleotide chain T can be reduced. As a result, the hybridization efficiency can be improved.

A method for pipetting a sample solution S containing the nucleotide chains D to be detected or the target nucleotide chain T on the reaction area 21b can be appropriately selected among common methods. An ink-jet printing method can be preferably used.

This is because minute drops can be accurately pipetted by precisely following predetermined reaction areas 21b. A nozzle used in an ink-jet printer is applied to this ink-jet printing method. The substances to be detected are jetted from a printer head to a substrate using electricity so as to be fixed, as in the ink-jet printer. This method includes a piezoelectric ink-jet method, Bubble Jet (registered trademark) method, and an ultrasonic jet method.

In the present invention, the piezoelectric ink-jetting method can be particularly used as the ink-jet printing method. In the piezoelectric ink-jetting method, the droplets are jetted by a displacement pressure generated by applying a pulse to a piezoelectric material. Since the size of the droplet (minute drop) can be controlled by changing the applied pulse shape, the analysis accuracy is preferably improved. When the surface of the droplet has a small radial curvature, the size of the droplet can be controlled so as to be small. When the surface of the droplet has a large radial curvature, the size of the droplet can be controlled so as to be large. Furthermore, the surface of the droplet can be drawn toward the inside by suddenly changing the pulse in the negative direction, thereby decreasing the radial curvature.

In an example shown in Fig. 2, the areas 2 to be detected are arrayed such that the disc is equally divided into eight parts in the circumferential direction. Two lines of the areas 2 to be detected are also arrayed in the radial direction. The number of areas 2 to be detected is not particularly limited. The areas 2 to be detected are preferably arrayed in concentric circles or in a spiral shape, because, as will be described later, the nucleotide chains D to be detected or the target nucleotide chain T can be continuously pipetted while the substrate 1 is rotated. In addition, the above structure can continuously perform data interpretation. Herein, the term continuously refers to not only the case where the operation is performed continuously without any interruption but also to the case where the operation is performed almost continuously without interrupting the operation over a long period of time.

In the example shown in Fig. 2, the areas 2 to be detected are arrayed such that the disc is equally divided in the circumferential direction. Although the length of the servo area 22 has a slight variation depending on servo information to be written, the length can be considered to be approximately the same, compared with the dimension of the whole substrate 1. Accordingly, as the location of an area 2 to be detected becomes closer to the outer circumference, the length of the data-detecting area 21 becomes larger.

All areas 2 to be detected may have the data-detecting area 21 having the same dimension. In this case, however, when the substrate information is interpreted, which will be described later, the rotating speed of the substrate is preferably controlled as follows in order to perform reliable detection: The rotating speed of the substrate at an area 2 to be detected disposed at the outer circumference is preferably lower than that of the substrate at an area 2 to be detected disposed at the inner circumference. Thus, during interpreting (i.e., reading), the fluctuation of the linear velocity at all the data-detecting areas 21 is suppressed.

In contrast, when the areas 2 to be detected are arrayed such that the disc is equally divided in the circumferential direction, the rotating speed of the substrate 1 may be constant regardless of the position of the areas 2 to be detected. This argument can be readily understood by contrasting constant angular velocity (CAV) recording mode and constant linear velocity (CLV) recording mode in optical disc technology.

In the present invention, for example, the sample solution S is pipetted from the discharging head N on (the reaction areas 21b of) the areas 2 to be detected arrayed in the circumferential direction with high accuracy, while the disc-shaped substrate 1 shown in Fig. 2 as an example is rotating. The optical pickup operation for detecting fluorescence from each area 2 to be detected is controlled.

The areas 2 to be detected disposed at a plurality of divided sections in the circumferential direction are preferably arrayed in a spiral shape, that is, in a vortex shape in the radial direction. In such a structure, the sample solution S can be pipetted continuously and the optical pickup analysis can also be performed continuously.

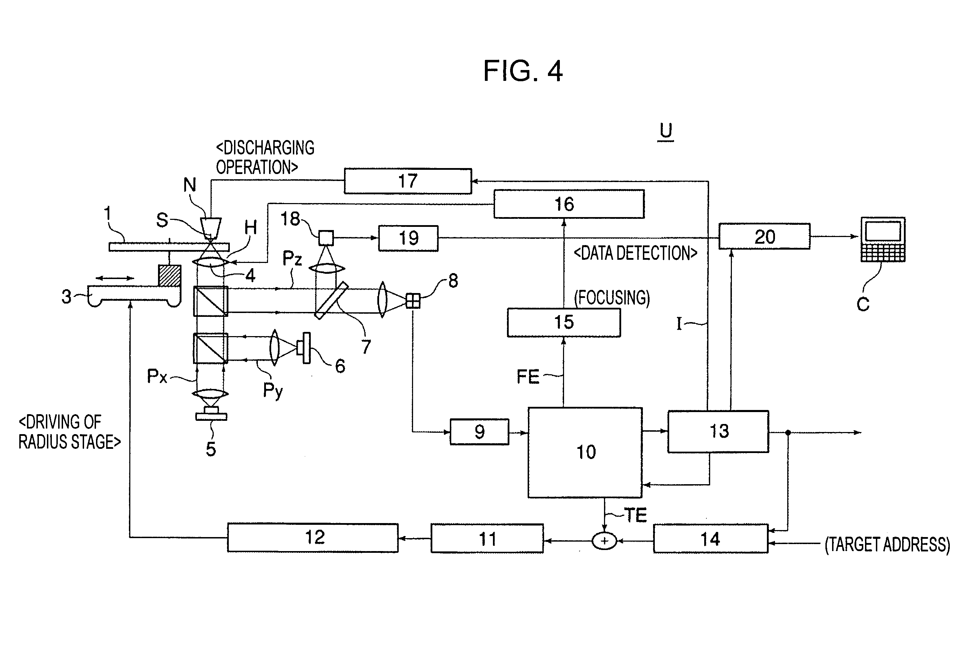

A preferable embodiment of a device for interpreting substrate information according to the present invention and a method for interpreting substrate information using the device will now be described with reference to Fig. 4.

As described above, each area 2 to be detected includes a data-detecting area 21 and a servo area 22. The servo area 22 includes a servo mark 221 to control the position in the radial direction and an address mark 222 that provides address information of each area 2 to be detected on the substrate 1 (see Fig. 1 again). When the areas 2 to be detected arranged as shown in Fig. 1 or Fig. 2 are arrayed in the circumferential direction or in a spiral shape, the data-detecting area 21 and the servo area 22 are arrayed one after another in that order. As a result, the servo areas 22 are discontinuously arrayed to serve as the sample servo system used in optical disc technical field. The line L in Fig. 1 indicates an optical pickup regenerative signal.

The servo mark 221 and the address mark 222 can be formed according to a common optical disc mastering process. That is, when the substrate 1 is considered as an optical disc, the reaction area 21b, which is a detecting position of pipetting, is considered as a user data area. Synchronous pits are arrayed on the other areas with the sample servo system etc. The other areas are also used as a tracking servo. Furthermore, address areas (geographic address on the disc, see Fig. 2) can be inserted in the following position, thereby providing positional information.

Each of the address areas begins with a sector mark, which is a starting pattern, and is formed by combining a variable frequency oscillator (VFO) that provides the rotational phase of the actual rotating disc, the address mark providing the starting position of the address data, and an identifier (ID) including the numbers of the track and the sector etc.

The information in the radial direction of the substrate 1 is based on track positional information acquired from a fine error signal and the address mark 222. The fine error signal is based on the difference in the signal level from the servo marks 221 (see Fig. 1) disposed at positions deviated by +1/4 tracks and -1/4 tracks in the radial direction. A radius stage indicated by reference numeral 3 in Fig. 4 drives the whole substrate 1 according to the above track positional information. Thus, an optical head H and a discharging head N are positioned.

The positioning of the discharging head N and the optical head H that performs an optical pickup is controlled according to an address-tracking error signal TE and a focus error signal FE. The address-tracking error signal TE and the focus error signal FE are obtained from the regenerative signal obtained using optical pickup from the reading side of the substrate 1 rotating on the radius stage 3.

In Fig. 4, reference numeral 8 indicates a photodetector used for trapping and detecting return light Pz, which passes through a dichroic mirror 7, enters directly, and has a specific wavelength region. Reference numeral 9 indicates a converter that performs IV conversion of a signal from the photodetector 8. Reference numeral 10 indicates an error signal detection element. The error signal detection element 10 provides the address-tracking error signal TE and the focus error signal FE. Reference numeral 11 indicates a phase compensation circuit element, reference numeral 12 indicates a radius stage-driving circuit element, and reference numeral 13 indicates a phase locked loop (PLL) circuit element and an address detection element. Reference numeral 14 indicates a rough error signal between the track addresses and the target positions, the signal being obtained from the PLL circuit element and the address detection element 13. In the sample servo system, a sample-and-hold circuit may be formed in the error signal detection element 10.

Focusing of the optical head H, which corresponds to a reproducing optical system in optical disc technology, is performed by controlling an objective lens 4 according to the focus error signal FE (see Fig. 4) obtained by the astigmatic method generally used in common optical disc devices. Reference numeral 15 indicates a phase compensation circuit element used for focusing the optical head H. Reference numeral 16 indicates a focus driving circuit element for controlling the motion of the objective lens 4.

Subsequently, when the sample solution S is discharged from the discharging head N, (the position of) an area 2 to be detected is detected by the address detection element represented by reference numeral 13 according to a servo signal of the area 2 to be detected obtained from the regenerative signal. When the discharging head N is disposed above the data-detecting area 21 (of the area 2 to be detected), the sample solution S (see Fig. 4) containing the nucleotide chains D to be detected or the target nucleotide chain T is discharged according to a timing signal I generated in the PLL circuit represented by reference numeral 13. Reference numeral 17 in Fig. 4 indicates a driving circuit for controlling the discharging operation of the sample solution S with the discharging head N according to the timing signal I.

In order to protect the nucleotide chains D to be detected or the target nucleotide chain T from the effect of light irradiation, this device is designed such that a reproducing LD light source 5 provided for the servo is emitted only in the servo area 22 (of each area 2 to be detected) (see Fig. 1). Symbol Px in Fig. 4 indicates a laser beam for the servo emitted from the reproducing LD light source 5.

When the fluorescence level is detected, the reproducing LD light source 5 for the servo is quenched at the data-detecting area 21 (see Fig. 1). Instead, a light source 6 for fluorescent excitation shown in Fig. 4 is used when detecting (i.e., reproducing), and a fluorescent substance F marking the target nucleotide chain T (or a fluorescent intercalator intercalated in a double-stranded nucleotide chain) is irradiated with excitation light Py emitted from the light source 6.

Subsequently, the return light Pz of the excitation light Py is deflected by 90 degrees with the dichroic mirror 7 having wavelength-selectivity (see Fig. 4). The return light Pz is trapped and detected with the following photodetector 18 and subjected to IV conversion with the following converter 19. The fluorescence level is detected at a detecting element 20. The analysis result is displayed on the display of a computer C.

The reason that the two light sources (represented by reference numerals 5 and 6) are provided in the embodiment shown in Fig. 4 will now be described. In optical disc technology, the wavelength of a light source for a servo is, for example, 780 nm for CDs and 650 nm for DVDs. These wavelengths correspond to red light and light close to red light.

On the other hand, the fluorescent substance F (see Fig. 3) used for marking the nucleotide chain, for example, POPO-1, which will be described later, has an excitation wavelength of about 440 nm, that is, light in the blue region. When a fluorescent substance F having an excitation wavelength close to the wavelength of the light source used for CDs or DVDs is used, the light sources 5 and 6 can be used in common. However, when the light intensity is increased for the purpose of accurate servo control, a substances D to be detected or a target substance T may be affected to some degree.

For these reasons, the light source 6 has a wavelength suitable for the fluorescent substance F and has an intensity that does not affect the substances D to be detected or the target substance T. A light source used for CDs or DVDs, or a similar light source, can be used as the light source 5. The range of intensity of the light source 5 is controlled so that the servo control can be accurately performed. Thus, efficient servo control and detecting operation can be performed, while the effect of light irradiation on the substances D to be detected or the target substance T can be suppressed.

The two light sources 5 and 6 may be combined in one light source and the light intensity may be changed between the data-detecting area 21 and the servo area 22. Thus, optical pickup suitable for both fluorescent light measurement and the interpreting of positional information can be performed.

In the present invention, the method for marking sample substances is not strictly limited. For example, in addition to a method for marking the target substance with a fluorescent substance, a fluorescent intercalator may be used. The fluorescent intercalator is introduced in a hybridized double-stranded nucleotide chain so as to be intercalated in the hydrogen bond between the base of a nucleotide chain D to be detected and the base of a target nucleotide chain T. As a result, the fluorescent wavelength is shifted to the long-wavelength side, and in addition, quantitative detection can be performed based on the correlation between the fluorescence intensity and the amount of fluorescent intercalator introduced in the double-stranded DNA. Examples of a fluorescent dye used in the fluorescent intercalator include POPO-1 and TOTO-3.

The use of the above device U for interpreting substrate information can control the light sources 5 and 6 with time-sharing at the data-detecting area 21 and the servo area 22 of each area 2 to be detected. As a result, high-accuracy control by an error signal can be performed, and in addition, damage of the sample substances (T, D) can be prevented.
(1) According to the present invention, substances to be detected or a target substance can be disposed or pipetted efficiently and precisely on a plurality of arbitrary reaction areas formed on a disc-shaped substrate. Also, a mutual reaction process such as hybridization in arbitrary reaction areas can be precisely detected.
(2) A strict detection of hybridization or other mutual reaction processes between substances can be accurately measured without damaging sample substances using a substrate similar to an optical disc, which can be produced very inexpensively on a large scale.
(3) The present invention is particularly useful in a bioassay method based on a DNA chip or a biosensor chip.

The present invention can be used for the analysis of gene mutation, the analysis of single nucleotide polymorphisms (SNPs), the analysis of the frequency of gene expression, and the like. The present invention can be widely utilized in many fields such as the development of new drugs, clinical diagnosis, pharmacogenomics, and forensic medicine. Furthermore, the present invention can be used in, for example, assaying antigen-antibody reactions and assaying endocrine-disrupting chemicals.

## Claims

1. A substrate for bioassay that has a disc-shape and can optically interpret recorded information, the substrate comprising areas to be detected comprising the following areas (1) and (2) as a unit:
(1) a data-detecting area comprising at least a reaction area providing an area used for a mutual reaction process of substances to be detected and a target substance; and
(2) a servo area disposed in the area that is not overlapped with the data-detecting area and optically providing positional information on the data-detecting area.

2. The substrate for bioassay according to claim 1, wherein the reaction area comprises a detection surface on which a surface treatment is performed so as to fix the substances to be detected.

3. The substrate for bioassay according to claim 1, wherein the substances to be detected and the target substance are nucleotide chains and the mutual reaction process is hybridization.

4. The substrate for bioassay according to claim 1, wherein a plurality of the areas to be detected are arrayed in the circumferential direction.

5. The substrate for bioassay according to claim 4, wherein the areas to be detected are arrayed in concentric circles or in a spiral shape when viewed from the top.

6. The substrate for bioassay according to claim 1, wherein the positional information comprises a tracking mark and an address mark.

7. A device for interpreting substrate information, the device for optically interpreting information on the substrate for bioassay according to claim 1,
wherein a positioning operation of a discharging head used for pipetting a sample solution on the data-detecting area and a positioning operation of an optical head used for irradiating light and receiving the reflected light to detect the positional information and to detect information on the mutual reaction process in the reaction area are controlled according to positional information obtained from the servo area.

8. The device for interpreting substrate information according to claim 7, wherein the data-detecting area is irradiated with only excitation light for detection.

9. A method for interpreting substrate information, the method for optically interpreting information on a substrate for bioassay that has a disc-shape and can optically interpret recorded information, the substrate comprising a data-detecting area comprising at least a reaction area providing an area used for a mutual reaction process of substances to be detected and a target substance; and a servo area disposed in the area that is not overlapped with the data-detecting area and optically providing positional information on the data-detecting area,
wherein a step of positioning a discharging head used for pipetting a sample solution on the data-detecting area and a step of positioning an optical head used for irradiating light and receiving the reflected light to detect the positional information and to detect information on the mutual reaction process in the reaction area are controlled according to positional information obtained from the servo area.

10. The method for interpreting substrate information according to claim 9, wherein the data-detecting area is irradiated with only excitation light for detection.
